# EUROPÄISCHE PATENTSCHRIFT

(11) **EP 1 308 665 B1**
(45) Veröffentlichungstag und Bekanntmachung des Hinweises auf die Patenterteilung: **18.08.2004**
(21) Anmeldenummer: 02023336.7
(22) Anmeldetag: 18.10.2002
(51) Int. Cl.: F16L 59/14

(54) **Isoliertes Leitungsrohr**
Insulated pipe
Canalisation avec isolation thermique

(30) Priorität: 03.11.2001 DE 10154144
(43) Veröffentlichungstag der Anmeldung: 07.05.2003
(73) Patentinhaber: KM Europa Metal AG, 49074 Osnabrück (DE)
(72) Erfinder: Reiter, Ulrich, Dr.-Ing., 49080 Osnabrück (DE)

(56) Entgegenhaltungen:
- EP-A- 1 036 827
- DE-A- 19 544 763
- FR-A- 2 332 483
- US-A- 4 942 903
- US-B1- 6 303 730

## Beschreibung

Leitungsrohre erhalten in der Regel eine Isolierung, die zur Wärme- bzw. Kälteisolation, aber auch zur Schalldämmung dient. Für die werksseitige Ummantelung von Leitungsrohren, insbesondere für Installationsrohre aus Kupfer, werden abhängig von den geforderten Eigenschaften überwiegend Kunststoffe, wie z.B. Polyvinylchlorid (PVC), Polyethylen (PE) oder Polyurethan (PU) eingesetzt. Diese Kunststoffe sind allerdings brennbar, so daß im Rahmen des baulichen Brandschutzes vorbeugende Maßnahmen zur Verhinderung der Ausbreitung von Feuer und Rauch sichergestellt sein müssen.

Grundlegende Norm für die Bestimmung des Brandverhaltens von Baustoffen und Bauteilen ist DIN 4102, wobei für ummantelte Leitungsrohre die Brandklassifizierung B2 (normal entflammbar) oder B1 (schwer entflammbar) angestrebt wird. Um die Brandklassifizierungen B1 oder B2 zu erreichen, sind in der Regel teure und häufig umweltschädliche Flammschutzmittel erforderlich, die den Kunststoffummantelungen in relativ hohen Dosierungen zugegeben werden. Zudem haben die Flammschutzmittel negative Auswirkungen auf die Produkteigenschaften eines Leitungsrohrs. Zum Beispiel kann die mechanische Festigkeit oder die Wärmedämmwirkung der Ummantelung herabgesetzt sein. Gleichzeitig werden das Gewicht, die Temperaturbeständigkeit und die Wärmeleitfähigkeit eines isolierten Leitungsrohrs negativ beeinflußt.

Hiervon ausgehend liegt der Erfindung die Aufgabe zugrunde, ein isoliertes Leitungsrohr bereitzustellen, bei welchem eine Reduzierung der heute eingesetzten Flammschutzmittelmenge unter gleichzeitiger Einhaltung der Vorgaben der DIN 4102 möglich ist.

Zur Lösung dieser Aufgabe schlägt die Erfindung die Auftragung einer Deckschicht auf die Ummantelung vor, wobei die Deckschicht aus einem nach der Sol-Gel-Methode gewonnenen nicht brennbaren anorganisch-organischen Hybridpolymer besteht.

Die Erfindung macht sich die Kenntnisse der Nanotechnologie zunutze, mit der es gelungen ist, sogenannte nanostrukturierte Gläser und Keramikwerkstoffe (Ormocere = organically modified ceramics) zu gewinnen. Beim Sol-Gel-Prozeß werden durch Hydrolyse und Kondensation von Alkoxiden, vorwiegend des Siliziums, Aluminiums, Titans und Zirkons kolloidale Beschichtungslösungen hergestellt. Bei dem Prozeß wird ein anorganisches Netzwerk aufgebaut, z.B. können über entsprechend modifizierte Kieselsäureester zusätzlich organische Gruppen eingebaut werden, mit deren Hilfe das Eigenschaftsprofil gezielt beeinflußt werden kann.

Bei der Herstellung nach dem Sol-Gel-Prozeß befinden sind die organischanorganischen Hybridpolymere zunächst im flüssigen Zustand. Das flüssige Sol kann unproblematisch bei einem Ummantelungsprozeß eines Leitungsrohrs zusätzlich als Deckschicht aufgebracht werden. Durch Aushärtung, beispielsweise durch eine photochemische Reaktion unter ultraviolettem Licht oder durch Wärmezufuhr wird eine feste Deckschicht ausgebildet.

Die Deckschicht besitzt gleichförmige Partikelteilchen mit einem Durchmesser von nur wenigen Nanometern, die mit Teilchenabständen von unter 0,5 Nanometern extrem dicht aneinander gepackt sein können.

Je nachdem unter welchen Bedingungen der Sol-Gel-Prozeß verläuft, kann die Deckschicht unter Wärmeeinwirkung eine hitzeresistente Schicht ausbilden (Anspruch 2), die glashart ist (Anspruch 3) oder zu einem wärmedämmenden Schaum wird (Anspruch 4).

Diese hitzeresistente Schicht sorgt dafür, daß die Ummantelung aus in der Regel brennbarem Kunststoff zunächst abgekapselt wird und eine Flammausbreitung in der Ummantelung aus Kunststoff unterbunden wird. Hierdurch ist es möglich, Kunststoffe mit einem reduzierten Anteil an Flammschutzmittel zu verwenden oder sogar Ummantelungen einzusetzen, die frei von Flammschutzmitteln sind (Anspruch 5).

Nach Anspruch 6 ist vorgesehen, daß die Deckschicht transparent ist. Selbstverständlich ist auch die Zugabe temperaturbeständiger Farbstoffe zu dem anorganisch-organischen Hybridpolymer möglich.

## Patentansprüche

1. Isoliertes Leitungsrohr, umfassend ein metallisches Rohr mit einer Ummantelung aus Kunststoff, bei welchem auf die Ummantelung eine Deckschicht aufgetragen ist, die aus einem durch Hydrolyse und Polymerisation unter den Bedingungen des Sol-Gel-Prozesses gewonnenen nicht brennbaren anorganisch-organischen Hybridpolymer besteht.

2. Isoliertes Leitungsrohr nach Anspruch 1, bei welchem die Deckschicht unter Wärmeeinwirkung eine hitzeresistente Schicht ausbildet.

3. Isoliertes Leitungsrohr nach Anspruch 2 bei welchem die hitzeresistente Schicht glashart ist.

4. Isoliertes Leitungsrohr nach Anspruch 2, bei welchem die hitzeresistente Schicht ein wärmedämmender Schaum ist.

5. Isoliertes Leitungsrohr nach einem der Ansprüche 1 bis 4, bei welchem die Ummantelung frei von Flammschutzmitteln ist.

6. Isoliertes Leitungsrohr nach einem der Ansprüche 1 bis 6, bei welchem die Deckschicht transparent ist.

## Claims

1. Insulated pipe, comprising a metal pipe with a sheathing made of plastics material, in which an outer layer is applied to the sheathing, which outer layer consists of a non-flammable inorganic/organic hybrid polymer obtained by hydrolysis and polymerisation under the conditions of the sol/gel process.

2. insulated pipe according to claim 1, in which the outer layer forms a heat-resistant layer under the action of heat.

3. Insulated pipe according to claim 2, in which the heat-resistant layer is glass-hard.

4. Insulated pipe according to claim 2, in which the heat-resistant layer is a heat-insulating foam.

5. Insulated pipe according to any one of claims 1 to 4, in which the sheathing is free of fire-proofing agents.

6. Insulated pipe according to any one of claims 1 to 6, in which the outer layer is transparent.

## Revendications

1. Canalisation avec isolation thermique comprenant un tube métallique avec une enveloppe en matière plastique, enveloppe sur laquelle est appliquée une couche de recouvrement constituée d'un polymère hybride inorganique-organique, ininflammable, obtenu par hydrolyse et polymérisation dans les conditions du procédé sol-gel.

2. Canalisation avec isolation thermique selon la revendication 1,
dans laquelle
la couche de recouvrement forme, sous l'action de la chaleur, une couche résistante à la chaleur.

3. Canalisation avec isolation thermique selon la revendication 2,
dans laquelle
la couche résistante à la chaleur est dure comme le verre.

4. Canalisation avec isolation thermique selon la revendication 2,
dans laquelle
la couche résistante à la chaleur est une mousse formant une isolation thermique.

5. Canalisation avec isolation thermique selon l'une des revendications 1 à 4,
dans laquelle
l'enveloppe est exempte de moyens pare-flammes.

6. Canalisation avec isolation thermique selon l'une des revendications 1 à 6,
dans laquelle
la couche de recouvrement est transparente.
